# FASCICULE DE BREVET EUROPEEN

(11) **EP 3 666 443 B1**
(45) Date de publication et mention de la délivrance du brevet: **04.05.2022**
(21) Numéro de dépôt: 19209805.1
(22) Date de dépôt: 18.11.2019
(51) Int. Cl.: B23K 20/12, C21D 9/50, C22F 1/18, B23K 103/14

(54) **PROCÉDÉ DE SOUDURE DE PIÈCES PAR FRICTION LINEAIRE ET TRAITEMENT THERMIQUE**
SCHWEISSVERFAHREN VON WERKSTÜCKEN DURCH LINEARE REIBUNG UND WÄRMEBEHANDLUNG
METHOD FOR WELDING OF PARTS BY LINEAR FRICTION AND HEAT TREATMENT

(30) Priorité: 10.12.2018 FR 1872598
(43) Date de publication de la demande: 17.06.2020
(73) Titulaire: AIRBUS OPERATIONS (S.A.S.), 31060 Toulouse (FR)
(72) Inventeur: VALADON, Stéphane, 31060 TOULOUSE Cedex 9 (FR); DOD, Benjamin, 31060 TOULOUSE Cedex 9 (FR)
(74) Mandataire: Sarraméa, Claude

(56) Documents cités:
- LI WENYA ET AL: "Abnormal microstructure in the weld zone of linear friction welded Ti-6.5Al-3.5Mo-1.5Zr-0.3Si titanium alloy joint and its influence on", MATERIALS SCIENCE AND ENGINEERING: A, vol. 599, 2 avril 2014 (2014-04-02), pages 38-45, XP028628498, ISSN: 0921-5093, DOI: 10.1016/J.MSEA.2014.01.071
- WU SUJUN ET AL: "Effect of post weld heat treatment on microstructure and fracture toughness of friction welded joint", WUHAN UNIVERSITY OF TECHNOLOGY. JOURNAL (MATERIAL SCIENCE EDITION), WUHAN LIGONG DAXUE,WUHAN UNIVERSITY OF TECHNOLOGY, CN, vol. 31, no. 6, 21 décembre 2016 (2016-12-21), pages 1347-1351, XP036119811, ISSN: 1000-2413, DOI: 10.1007/S11595-016-1537-Y [extrait le 2016-12-21]
- BAESLACK W A ET AL: "WELDABILITY OF A TITANIUM ALUMINIDE", WELDING JOURNAL, AMERICAN WELDING SOCIETY, MIAMI, FL, US, vol. 68, no. 12, 1 décembre 1989 (1989-12-01), pages 483S-498S, XP000095165, ISSN: 0043-2296
- WANYING LIU ET AL: "Effect of Different Heat Treatments on Microstructure and Mechanical Properties of Ti6Al4V Titanium Alloy", RARE METAL MATERIALS AND ENGINEERING, vol. 46, no. 3, 31 mars 2017 (2017-03-31), pages 634-639, XP085133727, ISSN: 1875-5372, DOI: 10.1016/S1875-5372(17)30109-1

## Description

### DOMAINE TECHNIQUE

La présente invention concerne un procédé de soudure de pièces par friction linéaire en association avec un traitement thermique.

### ETAT DE LA TECHNIQUE ANTERIEURE

La soudure par friction linéaire (« linear friction welding » en Anglo-Saxon) est un procédé de soudage sous forme solide qui consiste à amener des pièces en contact et à créer un échauffement de friction sur les surfaces en contact grâce à un mouvement d'oscillation couplé à un effort latéral. L'échauffement et la pression vont faire déplacer plastiquement la matière, et les surfaces en contact vont fusionner. En refroidissant, les matériaux vont se solidifier et se souder.

Si un tel procédé de soudure permet d'obtenir des assemblages de bonne qualité, il est souhaitable de trouver un procédé qui permet d'améliorer la tolérance aux dommages de la soudure et de la pièce entière ainsi réalisée.

Le document "Abnormal microstructure in the weld zone of linear friction welded Ti-6.5Al-3.5Mo-1.5Zr-0.3Si titanium alloy joint and its influence on", par LI WENYA ET AL, MATERIALS SCIENCE AND ENGINEERING: A, vol. 599, pages 38-45 (qui forme la base pour la préambule de la revendication indépendante) , ainsi que le document "Effect of post weld heat treatment on microstructure and fracture toughness of friction welded joint", par WU SUJUN ET AL, WUHAN UNIVERSITY OF TECHNOLOGY, JOURNAL (MATERIAL SCIENCE EDITION), WUHAN LIGONG DAXUE, WUHAN UNIVERSITY OF TECHNOLOGY, CN, vol. 31, no. 6, 21 décembre2016 (2016-12-21), pages 1347-1351, divulguent un procédé de soudage par friction linéaire de pièces en alliage de titane.

Le document "WELDABILITY OF A TITANIUM ALUMINIDE", par BAESLACK W A ET AL, WELDING JOURNAL, AMERICAN WELDING SOCIETY, MIAMI, FL, US, vol. 68, no. 12, 1 décembre 1989 (1989-12-01), pages 483S-498S, décrit un traitement thermique de pièces en alliage de titane après avoir été forgées.

Le document "Effect of Different Heat Treatments on Microstructure and Mechanical Properties of Ti6Al4V Titanium Alloy", par WANYING LIU ET AL, RARE METAL MATERIALS AND ENGINEERING, vol. 46, no. 3, pages 634-639, décrit de façon générale les effets dans un matériau en alliage de titane pendant un traitement thermique.

### EXPOSE DE L'INVENTION

Un objet de la présente invention est de proposer un procédé de soudure de pièces par friction linéaire et traitement thermique, qui comporte une étape de chauffage de la zone de soudure et de la pièce entière ainsi réalisée afin d'améliorer ses propriétés en matière de tolérance aux dommages.

A cet effet, est proposé un procédé de soudure d'une première pièce et d'une deuxième pièce, ledit procédé de soudure comportant :
- une étape de friction linéaire au cours de laquelle les deux pièces sont frottées l'une contre l'autre dans un mouvement linéaire,
- une première étape de refroidissement au cours de laquelle la température des pièces ainsi soudées est abaissée à la température ambiante,
- une étape de chauffe au cours de laquelle les pièces ainsi soudées sont chauffées à une température supérieure à une température de transition entre un domaine biphasé α-β et un domaine monophasé β du matériau constituant les deux pièces, et
- une deuxième étape de refroidissement au cours de laquelle la température des pièces ainsi chauffées est abaissée à la température ambiante.

Un tel procédé permet de transformer la microstructure de la zone de soudure et de la pièce entière ainsi réalisée en une microstructure de phase α lamellaire dans une phase β transformée, qui présente une meilleure tolérance aux dommages.

Avantageusement, le procédé de soudure comporte, après la deuxième étape de refroidissement, une étape de réchauffe au cours de laquelle les pièces ainsi refroidies sont chauffées à une température inférieure à la température de transition.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec le dessin joint, parmi lequel :

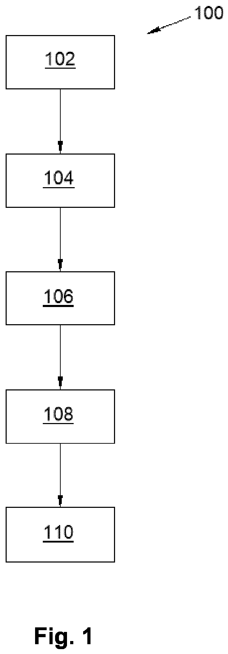

[Fig. 1] représente schématiquement un procédé de soudure selon l'invention.

### EXPOSE DETAILLE DE MODES DE REALISATION

L'invention est plus particulièrement décrite dans le cas de pièces en alliage de titane, comme par exemple les alliages désignés par les références Ti-64 ou Ti-6242S. Mais elle peut s'appliquer à d'autres matériaux comportant un domaine biphasé α-β et un domaine monophasé β et une température de transition entre ces deux domaines.

A l'origine, dans le domaine biphasé α-β, le matériau présente une structure globulaire lamellaire.

Le principe de l'invention réside dans le fait qu'en chauffant un matériau au-dessus de la température de transition, le matériau passe du domaine biphasé α-β au domaine monophasé β, et qu'en refroidissant le matériau, ce dernier revient dans le domaine biphasé α-β mais conserve certaines propriétés du domaine monophasé β. En effet, le matériau conserve la taille élevée des grains du domaine monophasé β, mais chaque grain prend une morphologie lamellaire : la phase α précipite de façon lamellaire dans la phase β, de manière à obtenir une phase α lamellaire dans une matrice β transformée.

Les alliages de titane du type Ti-64 ou Ti-6242S ayant une microstructure de phase α lamellaire dans une matrice β transformée issue d'un traitement thermomécanique ou thermique dans le domaine β présentent une meilleure tolérance aux dommages que les microstructures du type globulaire lamellaire issues d'un traitement thermomécanique dans le domaine α-β.

La Fig. 1 illustre un procédé de soudure 100 selon l'invention d'une première pièce et d'une deuxième pièce où ledit procédé de soudure 100 comporte :
- une étape de friction linéaire 102 au cours de laquelle les deux pièces sont frottées l'une contre l'autre dans un mouvement linéaire,
- une première étape de refroidissement 104 au cours de laquelle la température des pièces ainsi soudées est abaissée à la température ambiante,
- une étape de chauffe 106 au cours de laquelle les pièces ainsi soudées et refroidies sont chauffées à une température supérieure à la température de transition (« β transus ») entre le domaine biphasé α-β et le domaine monophasé β du matériau constituant les deux pièces, et
- une deuxième étape de refroidissement 108 au cours de laquelle la température des pièces ainsi chauffées est abaissée à la température ambiante.

La température de transition dépend du matériau utilisé.

L'étape de friction consiste par exemple à fixer la première pièce et à déplacer la deuxième pièce linéairement en l'amenant en contact avec la première pièce et en la pressant contre la première pièce.

Ainsi quelle que soit la structure cristalline des pièces à l'origine, les deux pièces ainsi que la zone de soudure ont une microstructure de phase α lamellaire dans une matrice β transformée, ce qui permet d'avoir un assemblage homogène et de meilleures propriétés en matière de tolérance aux dommages, comparé à une microstructure du type globulaire lamellaire issue d'un traitement thermomécanique dans le domaine α-β.

En effet, si à l'origine les deux pièces ou l'une des deux pièces sont des pièces en alliage de titane de microstructure globulaire issue d'un traitement thermomécanique dans le domaine α-β, l'étape de chauffe après soudure va transformer l'assemblage complet en titane de microstructure de phase α lamellaire dans une matrice β transformée.

Si à l'origine les deux pièces sont en alliage de titane de microstructure de phase α lamellaire dans une matrice β transformée issue d'un traitement thermomécanique ou thermique dans le domaine β, l'étape de chauffe après soudure va à nouveau homogénéiser l'assemblage complet en titane de microstructure de phase α lamellaire dans une matrice β transformée.

Selon un mode de réalisation particulier de l'invention, dans le cas d'un alliage de titane Ti-64, les caractéristiques de l'étape de friction 102 sont les suivantes :
- La pression appliquée entre les surfaces en contact des deux pièces est de l'ordre de 90 MPa,
- La fréquence des oscillations est de l'ordre de 50Hz,
- La consommation matière lors de la soudure est de l'ordre de 3 mm,
- L'amplitude des oscillations est de l'ordre de 2 mm.

Selon un mode de réalisation particulier de l'invention, dans le cas d'un alliage de titane Ti-64 ou Ti-6242S, les caractéristiques de l'étape de chauffe 106 sont les suivantes :
- La température de chauffe est de l'ordre de 30°C au-dessus de la température de transition vers le domaine β, et
- La durée de l'étape de chauffe est d'au moins 30 min.

La température de chauffe est supérieure à la température de transition et elle est ajustée en fonction de la taille des grains souhaités pour la phase β.

La durée de l'étape de chauffe est ajustée en fonction de la taille des grains souhaités pour la phase β.

La vitesse de refroidissement de la deuxième étape de refroidissement 108 est ajustée en fonction des propriétés mécaniques souhaitées pour l'assemblage. De plus, si la vitesse de refroidissement est lente, par exemple 1°C/min, les tensions internes résiduelles dans l'assemblage sont minimisées.

Afin de réduire les tensions internes résiduelles dans l'assemblage, le procédé de soudure 100 comporte optionnellement, après la deuxième étape de refroidissement 108, une étape de réchauffe 110 au cours de laquelle les pièces ainsi refroidies sont chauffées à une température inférieure à la température de transition.

Par exemple, dans le cas d'un alliage de titane Ti-64, les caractéristiques de l'étape de réchauffe 110 sont typiquement les suivantes :
- La température de chauffe est de l'ordre de 700°C, et
- La durée de l'étape de réchauffe 110 est de l'ordre de 2 h.

De préférence, la température de chauffe est inférieure ou égale à 720°C afin de ne pas avoir d'impact négatif sur les propriétés des matériaux des deux pièces. La durée de l'étape de réchauffe 110 peut notamment être comprise dans un intervalle de 1h30 à 6 h environ.

Bien que la description précédente décrive la soudure d'une première pièce et d'une deuxième pièce, l'invention n'est pas limitée à la soudure de deux pièces et elle peut aussi s'appliquer à la soudure d'un nombre de pièces plus élevé.

## Revendications

1. Procédé de soudure (100) d'une première pièce et d'une deuxième pièce, ledit procédé de soudure (100) comportant :
- une étape de friction linéaire (102) au cours de laquelle les deux pièces sont frottées l'une contre l'autre dans un mouvement linéaire,
- une première étape de refroidissement (104) au cours de laquelle la température des pièces ainsi soudées est abaissée à la température ambiante,
ledit procédé étant **caractérisé en ce qu'**il comprend:
- une étape de chauffe (106) au cours de laquelle les pièces ainsi soudées sont chauffées à une température supérieure à une température de transition entre un domaine biphasé α-β et un domaine monophasé β du matériau constituant les deux pièces, et
- une deuxième étape de refroidissement (108) au cours de laquelle la température des pièces ainsi chauffées est abaissée à la température ambiante.

2. Procédé de soudure (100) selon la revendication 1, **caractérisé en ce qu'**il comporte, après la deuxième étape de refroidissement (108), une étape de réchauffe (110) au cours de laquelle les pièces ainsi refroidies sont chauffées à une température inférieure à la température de transition.

## Patentansprüche

1. Verfahren zum Verschweißen (100) eines ersten Teils und eines zweiten Teils, wobei das Verschweißungsverfahren (100) Folgendes umfasst:
- einen Schritt des linearen Reibens (102), in dessen Verlauf die zwei Teile in einer linearen Bewegung gegeneinander gerieben werden,
- einen ersten Abkühlungsschritt (104), in dessen Verlauf die Temperatur der so verschweißten Teile auf Umgebungstemperatur gesenkt wird,
wobei das Verfahren **dadurch gekennzeichnet ist, dass** es Folgendes umfasst:
- einen Erhitzungsschritt (106), in dessen Verlauf die so verschweißten Teile auf eine Temperatur oberhalb einer Übergangstemperatur zwischen einem a-β-Zweiphasenbereich und einem β-Einphasenbereich des Materials, aus dem die zwei Teile bestehen, erhitzt werden, und
- einen zweiten Abkühlungsschritt (108), in dessen Verlauf die Temperatur der so erhitzten Teile auf Umgebungstemperatur gesenkt wird.

2. Verschweißungsverfahren (100) nach Anspruch 1, **dadurch gekennzeichnet, dass** es nach dem zweiten Abkühlungsschritt (108) einen Wiedererhitzungsschritt (110) umfasst, in dessen Verlauf die so abgekühlten Teile auf eine Temperatur unterhalb der Übergangstemperatur erhitzt werden.

## Claims

1. Process (100) for welding a first part and a second part, said welding process (100) comprising:
- a linear friction step (102) during which the two parts are rubbed against one another in a linear movement,
- a first cooling step (104) during which the temperature of the parts thus welded is reduced to ambient temperature,
said process being **characterized in that** it comprises:
- a heating step (106) during which the parts thus welded are heated to a temperature above a temperature of transition between a two-phase α-β field and a single-phase β field of the material constituting the two parts, and
- a second cooling step (108) during which the temperature of the parts thus heated is reduced to ambient temperature.

2. Welding process (100) according to Claim 1, **characterized in that** it comprises, after the second cooling step (108), a reheating step (110) during which the parts thus cooled are heated to a temperature below the transition temperature.
